# EUROPEAN PATENT SPECIFICATION

(11) **EP 1 387 239 B1**
(45) Date of publication and mention of the grant of the patent: **04.04.2018**
(21) Application number: 03254769.7
(22) Date of filing: 30.07.2003
(51) Int. Cl.: G06F 1/00

(54) **Secure messaging**
Sichere Berichtübertragung
Messagerie sécurisée

(30) Priority: 01.08.2002 GB 0217882
(43) Date of publication of application: 04.02.2004
(60) Divisional application: 17171274.8
(73) Proprietor: SecurEnvoy Ltd, London WC1N 3ES (GB)
(72) Inventor: Kemshall Andrew Christopher, Basingstoke, Hants RG22 5EP (GB)
(74) Representative: Thompson, Andrew John

(56) References cited:
- EP-A- 0 785 661
- EP-A- 1 041 777
- US-A- 6 112 078

## Description

The present invention relates to transmission of messages. It particularly relates to transmission of email messages. Most particularly, it relates to transmission of email material of a confidential nature which must be maintained securely.

It is readily possible to send a secure email message all be it somewhat complex. You need, as the sender an S/MIME compliant email software package and a copy of the recipient's public key.

In order to obtain the recipient's public key it is necessary for the recipient to enrol for a digital certificate. The enrolment process includes the creation of a public key and a private key, however care must be taken for the protection of the private key and trust must be established between the sender and the recipient's public key.

Trust leads to the need for a Certificate Authority, a mutually agreed entity that has been vetted and trusted by both parties by means of each party taking the additional step of installing the Certificate Authority's root certificate.

Additionally it is necessary to establish as to whether or not the recipient's public key has been stolen by means of checking a certificate revocation list, which first must be located and trusted. These requirements and others are called creating a Public Key Infrastructure (PKI) and necessitate the creation of security documentation called Certificate Policy (CP) and Certificate Practise Statement (CPS).

Despite S/Mime being readily available for many years there has been very little uptake of the method because of the high costs and skills required to roll out a PKI along with the need for some complex knowledge of public key encryption being required by both sender and recipient. In addition, the sender needs to make trust discussions as to the validity of the recipient's certificate which often leads to reading complex Certificate Policy documentation for each recipient copied on the email. This high cost and complexity along with problems distributing the recipient's public keys has prevented the adoption of the technology.

An additional problem linked with sending encrypted email message is namely that of content checking gateways. Such gateways usually require traversing in order to deliver the message successfully. These gateways are typically configured to check for viruses and sensitive words within the content of the message or attachment. In order for said gateway to achieve this check it is required that the gateway decrypts the message. This in turn requires that the gateway has access to the recipient's private key or that the gateway must be copied on the email which usually requires the sender to re-send and make trust decisions as to the validity of the gateway. An alternative method employed by some systems is the sending of a program through email which, when opened by the recipient, prompts for a password and then automatically decrypts a message held within the program.

In recent time this last method has been shown to be unworkable because of email virus programs that employ the same method, namely that of assuming that the recipient will execute an attached program. The threat can be countered by content checking gateways or email programs which quarantine any attached executable programs and thus prevent their delivery.

A second alternative method is that of storing a message on an Internet facing web server and then delivering the message via the web server's secure communication link. This method has the draw back that the web server can be accessed by anyone, thus requiring a means of authenticating the recipient. The authentication can be achieved by means of the sender pre-agreeing a password with the recipient. The pre-agreed password requires a manual task on the part of the sender and fails to scale when sending high numbers of messages to multiple recipients.

The purpose of the present invention is to define a method and system whereby a recipient can read a secure message without the need for any additional software, any public keys or any complex encryption knowledge, the recipient only requiring standard email software, a web browser and a device capable of receiving their authentication code, for example, a mobile phone. In addition the method and system of the present invention provides a message capable of traversing any content checking email gateways and does not require the sender to take any additional manual tasks.

According to a first aspect, the present invention consists in a system for secure electronic communication of a secure email message from an originator's computer to a recipient's computer, said system comprising: a message splitter for splitting the secure email message into a first email message and a second message, including removing a security sensitive portion of the secure email message to be contained by the second message; message sending and code requesting means for using a first network connection to send the second message from the originator's computer to an external store and requesting a reference code from the external store, said external store being operative to grant access to stored content of said second message upon presentation of a two factor authentication comprising an authentication code and the reference code; email sending means to send the first email message, along with the reference code and notification that content of said second message is in said store, from the originator's computer to the recipient's computer; code sending means, for using a second network connection, to send said authentication code, separately from the reference code, for access by the recipient; accessing means for the recipient's computer to access said external means of the sender pre-agreeing a password with the recipient. The pre-agreed password requires a manual task on the part of the sender and fails to scale when sending high numbers of messages to multiple recipients.

The purpose of the present invention is to define a method and system whereby a recipient can read a secure message without the need for any additional software, any public keys or any complex encryption knowledge, the recipient only requiring standard email software, a web browser, and a device capable of receiving their authentication code, for example, a mobile phone. In addition the method and system of the present invention provides a message capable of traversing any content checking email gateways and does not require the sender to take any additional manual tasks.

According to a first aspect, the present invention consists in a system for secure electronic communication of a secure email message from an originator's computer to a recipient's computer, as defined in claim 1.

According to a second aspect, the present invention consists in a method for secure electronic communication of a secure email message from an originator's computer to a recipient's computer, as defined in claim 23.

The invention further provides notification means for the store to send a notification message to the originator when the recipient has gained access to the removed portion.

The invention further provides that the store can be operative to generate at least a portion of the authentication code.

The invention further provides that the first communication means can include a secure Internet connection, that the secure Internet connection can employ encryption, and that the secure Internet connection can include the use of a Secure Socket Layer (SSL).

The invention further provides that the first communication means can comprise a secure network and that the secure network can include the use of encryption.

The invention further provides that the second communication means can include means to connect through a communications gateway, that the gateway can be a cellular telephone network, the invention including means to send the authentication code to the recipient as a visually readable message which can be a short message service text message or can include Unstructured Supplementary Service Data (USSD).

The invention further provides that the gateway can connect to a Microsoft Passport network and that the second communication means can send the authentication code via the recipient's passport.

The invention further provides that the gateway can connect to a Microsoft Messenger network and the second communication means can send the authentication code as an instant message.

The invention further provides that the gateway can connect to a pager network and that the second communication means can send the authentication code as a pager message.

The invention further provides that the gateway can connect to a voice network and that the second communication means can include means to generate the authentication code as a synthesised voice message.

The invention further provides that the authentication code can be uniquely generated for each stored portion.

The invention further provides for the inclusion of means to provide the identity of the originator along with the authentication code.

The invention further provides that the third means of communication can include a secure Internet connection from a web browser connecting via an encrypted link to a web server.

The invention further provides that the third means of communication can include a secure Internet connection from a web browser connection via the URL HTTPS.

The invention further provides that the third means of communication can include a secure Internet connection from a web browser connecting via a Secure Socket Layer (SSL) to a web server.

The invention further provides that the third means of communication can include a secure Internet connection from a web browser connecting via Transport Layer Security (TLS) to a web server.

The invention further provides that the third means of communication can include a secure Internet connection from a mobile device's Wireless Access Protocol (WAP) browser connecting to a WAP gateway.

The invention is described and explained in more detail, by way of example, by the following description to be read in conjunction with the appended drawings in which:

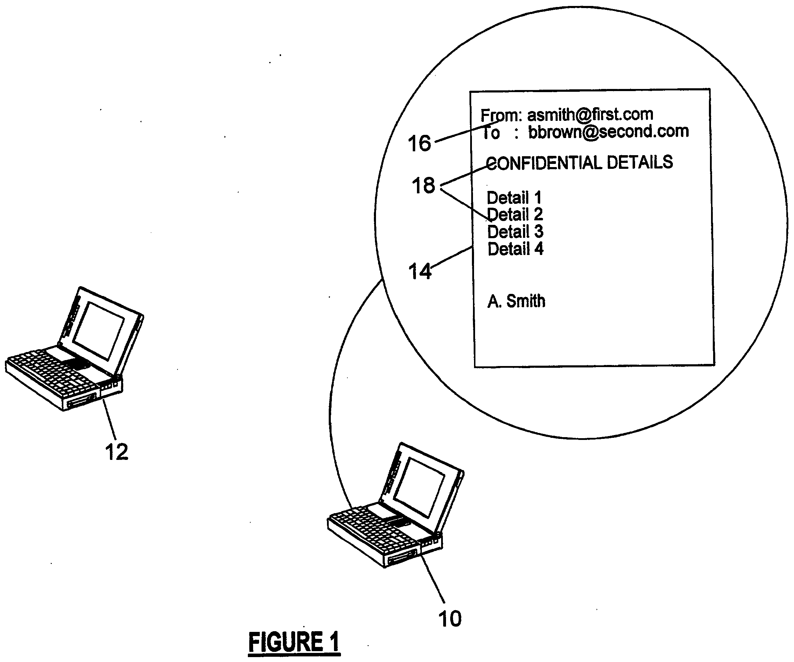

Figure 1 is a schematic diagram illustrating a first stage in the sending and receiving of a secure message.

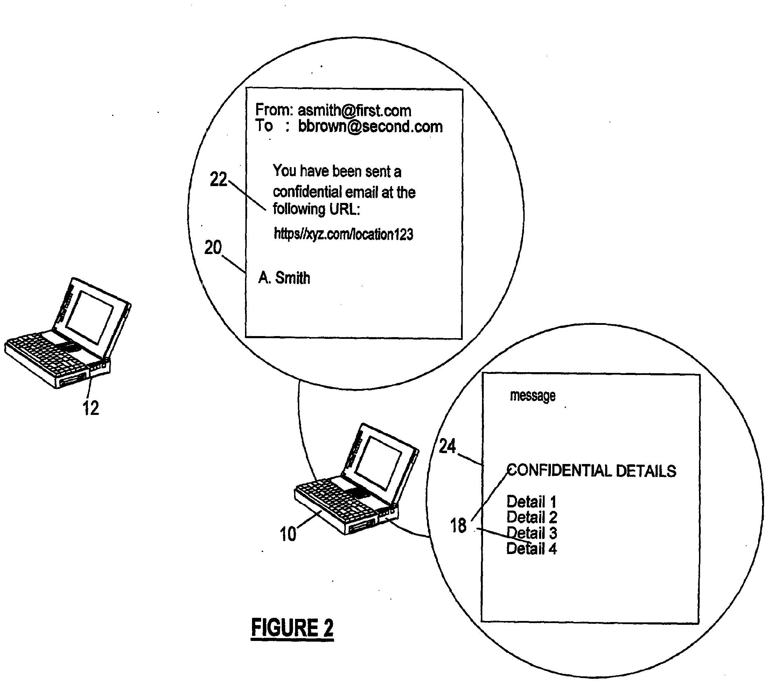

Figure 2 is a schematic diagram showing a second stage in the sending and receiving of a secure message.
Figure 3 is a schematic diagram showing a third stage in the sending and receiving of a secure message.

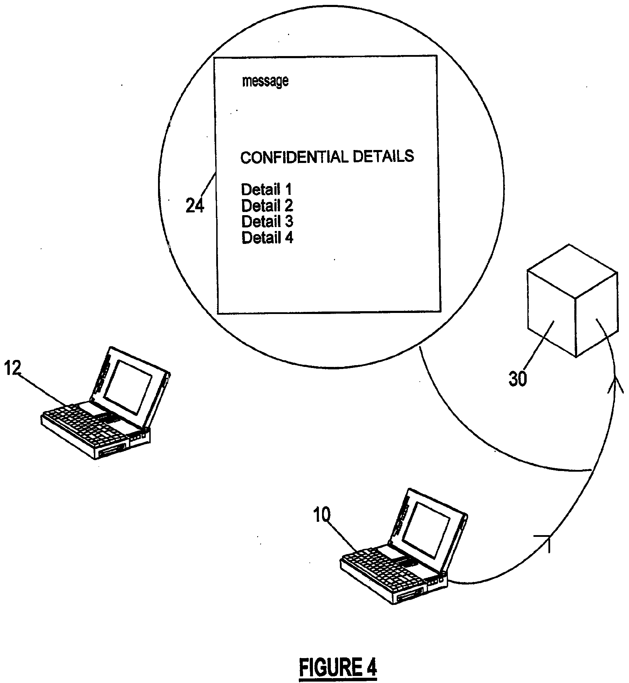

Figure 4 is a fourth stage in the sending and receiving of a secure message, illustrated by a schematic diagram.

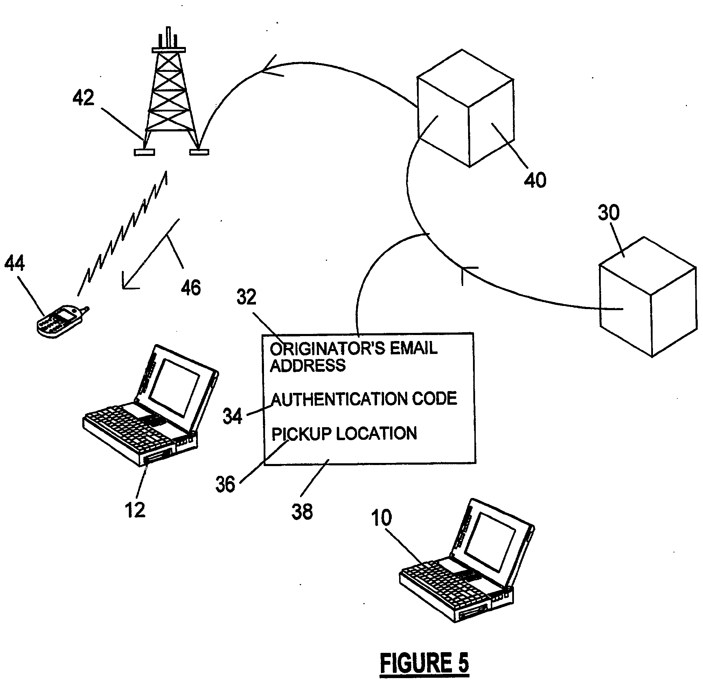

Figure 5 is a schematic diagram of a fifth stage illustrating the sending of an authentication code.

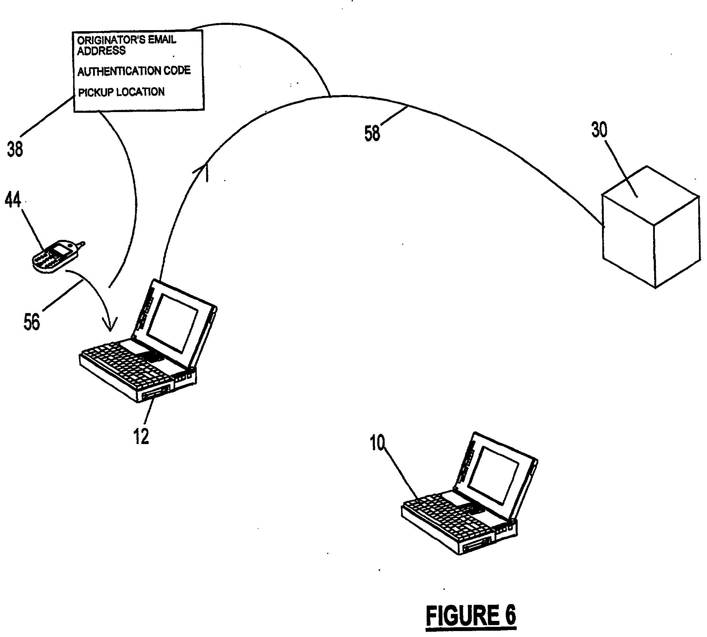

Figure 6 shows a sixth stage illustrating the authentication code of the recipient.

The recipient when wishing to access the secure portion of the received email message, makes a secure connection across the Internet to the storage site 30 by following the URL link in the initially received email message 20.

The authentication code within the authentication message 38 is transferred from the recipient's mobile telephone 44 as indicated by arrow 56 to be sent by the second computer 12 as indicated by arrow 58 to the storage site 30 for authentication.

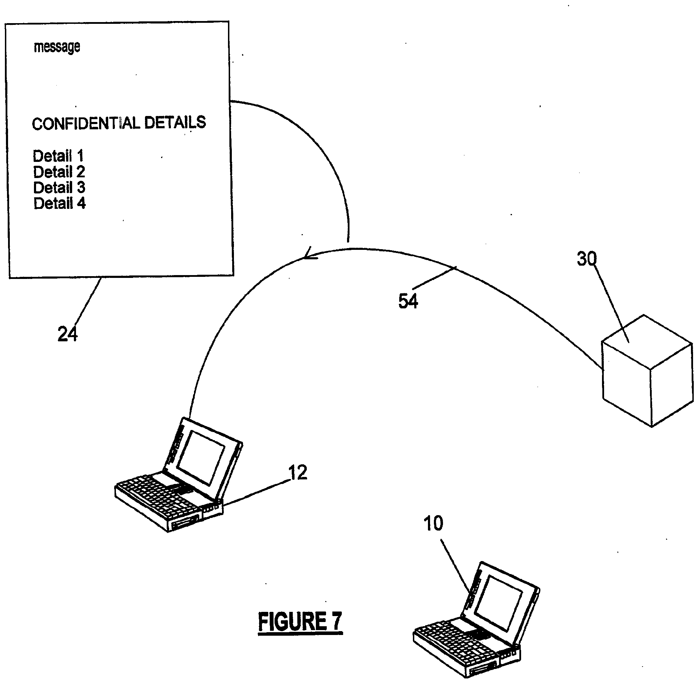

Attention is next drawn to Figure 7 showing the penultimate stage in transfer of a secure email message from a first computer 10 to a second computer 12.

If the storage site 30 recognises the authentication code 34 from the second computer 12 as being valid, the storage site 30 sends the second email message 24, as indicated by arrow 54 to the second computer 12. The second email message is sent, in this example, across a secure encrypted link such as Secure Socket Layer (SSL) A "socket" denotes the connection of one computer to another. Of course, the present invention encompasses the use of any other type of secure link.

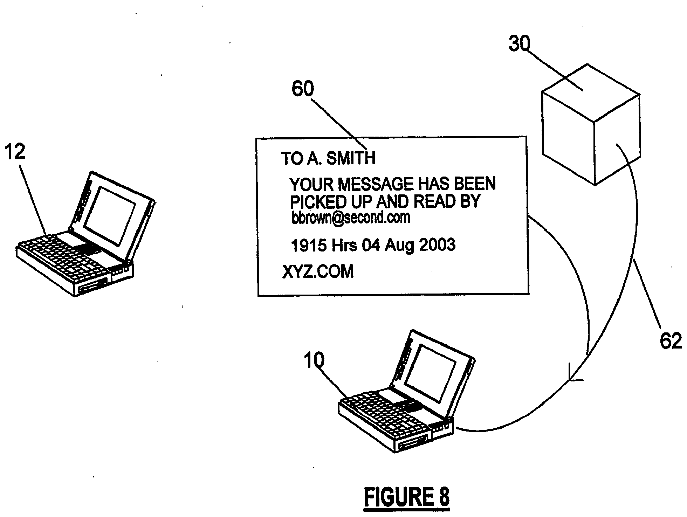

Attention is next drawn to Figure 8 showing the final stage in the transfer of a secure or confidential message from a first computer 10 to a second computer 12.

Having delivered the second email message 24 to the second computer 12 the storage site 30 then sends a delivery confirmation message 60 to the first computer 10 as indicated by arrow 62. If delivery has failed, the confirmation message is, by contrast, an "indication of failure to deliver" message.

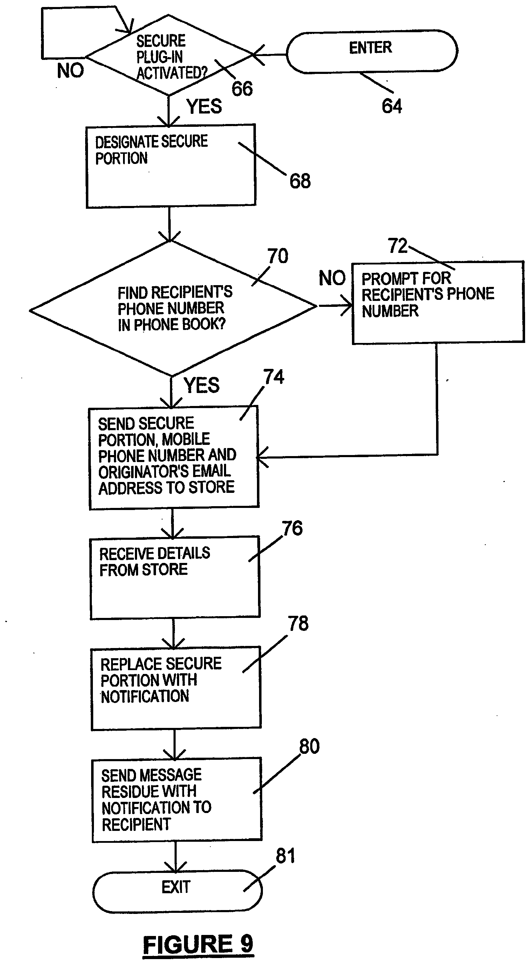

Attention is next drawn to Figure 9 showing a flow chart of the activity of the message originating first computer 10 when performing according to the present invention.

From entry 64 a first test 66 has a plug-in (additional computer program) on the existing email software of the first computer 10 check to see if the originator of the email message 14 has indicated to the first computer 10 that the message is to be sent securely.

If the first test 66 detects that the email message 14 is to be sent in a secure manner by means of the sender activating the plug-in, a first operation 68 designates that part of the email message 14 that is to be the secure portion 18 containing the confidential details.

A second operation 70 looks up, in this example, the mobile phone number from the email address book on computer 10. If this is unavailable, the sender is prompted to provide this information by a third operation 72. Next a fourth operation 74 sends the confidential and secure portion 18 along with, in this example, the recipient(s) mobile phone number(s) and sender's email address to the storage site 30.

The fourth operation 74 sends the secure portion 18 of the email message 14 to the storage site 30, for preference, using a secure Network which, again for preference, employs encryption so that the secure portion can arrive at the store without risk of interception and scrutiny. The preferred method of transmission employs a Secure Socket Layer (SSL), i.e a connection between two data processing entities employing encryption.

The secure store 30 can be anywhere on the Internet. Another alternative application for the present invention is where the secure store 30 comprises part of an internal Internet system, for example, within a company, known as an INTRANET. The secure store 30 can, in this example, be accessed from within the INTRANET or externally, through the Internet making connection to the INTRANET.

After the fourth operation 74, a fifth operation 76 receives details of the storage location identifier.

A sixth operation 78 then replaces the secure portion having the confidential details 18 with the notification message 22, which contains the storage location identifier necessary to retrieve the stored portion.

A seventh operation 80 then sends the message residue 20 containing the notification message 22 to the second computer 12 by instructing the existing email software to send, and then proceeds to exit 81.

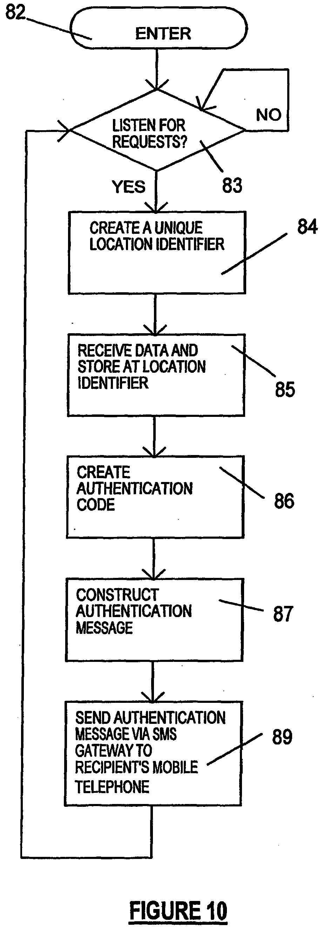

Attention is next drawn to Figure 10 showing the operation of the storage site 30 when receiving secure messages from computer 10 described in the earlier figures.

From entry 82 a listening process in the form of a second test 83 is started. If no requests are sent, process 83 continues to listen.

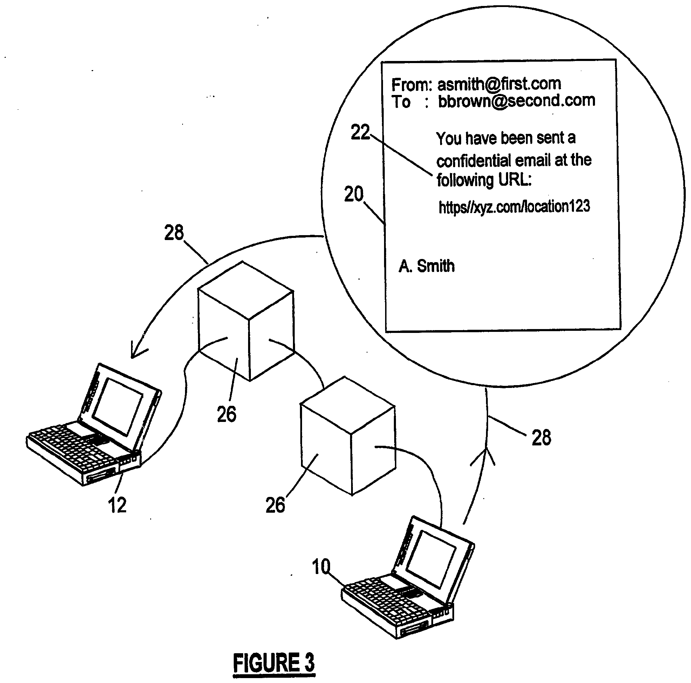

When computer 10 contacts this process, an eighth operation 84 creates a unique location identifier for subsequent storage and retrieval of secure data. The location identifier points to, in a well known example, a designated sub site on the URL identified, and is shown, again as an example, after the second / on the store's 30 web name in the notification message 22 shown in figure 3.

Next, a ninth operation 85 receives information from the sending computer 10 including the secure portion of the message, in this example, the mobile phone number(s) of one or more of the recipient's and the sender's email address and stores it at the location identified in the eighth operation 84. A tenth operation 86 then creates an authentication code, typically six to ten characters, and moves to an eleventh operation 87 which constructs an authentication message 38 containing the sender's email address (for reference), the authentication code created in the tenth operation 86 and an optional pickup location as created in the eighth operation 84. Finally, a twelfth operation 88 sends the authentication message 38, created in the eleventh operation 87, through, in this example, the SMS gateway 40, that in turn is delivered to the recipient's mobile phone 44, as a text message. Control is then passed back to the second test 83 to continue listening for further requests.

The SMS message is a visually readable message. The present invention also encompasses the visually readable message can be of various different alternative forms.

One alternative form is as an Unstructured Supplementary Service Data (USSD) message, where the signaling codes, used in a telephone network, for example, to indicate redirection of calls, the use of other services, messages etc are used to send the visually readable message.

Another alternative form for the visually readable message is as a picture transmitted on a multi-media message service, a feature of the recently introduced multi-media enabled cellular telephones.

Another alternative form for the visually readable message is as an automatically generated facsimile message (FAX).

Another alternative form for the visually readable message is as a pager message, in which instance the gateway connects to a pager network.

Another alternative for the visually readable message is as an "Instant Message" for a Microsoft Messenger Network, a feature of the Windows XP and the Pocket PC operating systems marketed by Microsoft Corporation, in which "Instant Messages" are sent as text. The gateway, of course, in this instance, must provide appropriate connection.

Another alternative for the visually readable message is as a message on a Microsoft Passport network, proprietary to Microsoft Corporation, employing the recipient's "passports".

Of course, these are simply examples, and the invention encompasses any form of transmission of a visually readable image.

The authentication code can also be of a non-visually readable form, and, for example, can consist of a synthesized voice message, which can be instantly delivered, or stored for retrieval at a later time.

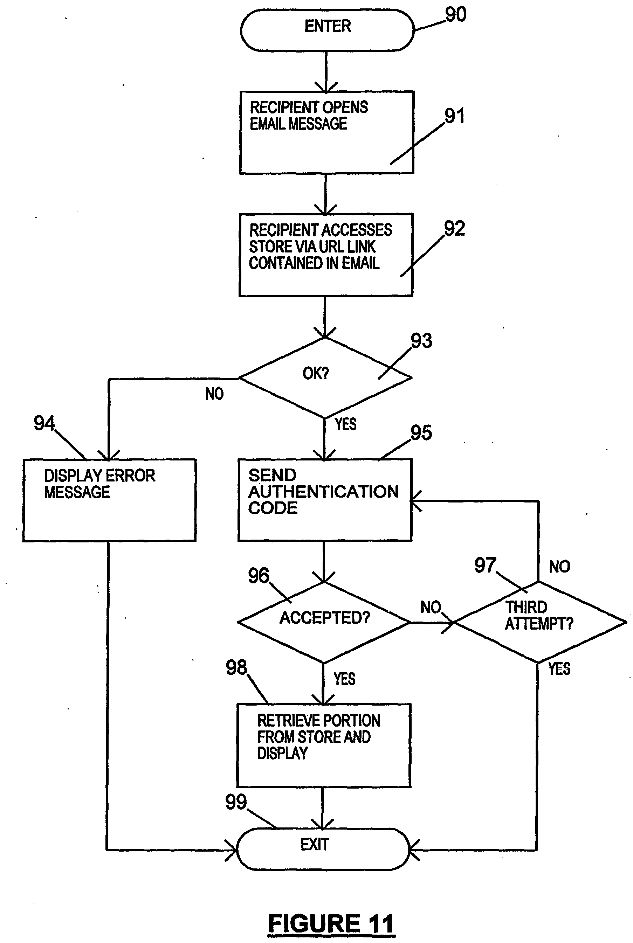

Attention is next drawn to Figure 11 showing the operation of the second computer 12 in the processes described in the earlier figures.

From entry 90 a thirteenth operation 91 has the recipient on the second computer 12 receive the email message sent in the seventh operation 80 and view it with their existing non-modified email client software. Next, a fourteenth operation 92 has the recipient access the storage site 30 via an encrypted link across the Internet, by accessing the URL address contained within the first portion 20 of the email message 14. A third test 93 then checks whether access to the secure storage site 30 has been achieved and, if not, passes control to a sixteenth operation 94 which displays the error message sent from secure site 30 and moves to exit 99. If access to the secure storage site 30 has been achieved, the second computer 12, in a seventeenth operation 95, sends the authentication code 34 to the secure storage site 30.

The authentication code 34 can have been acquired by manual entry from the received text message by the recipient's mobile telephone 44. As an alternative, the recipient's mobile telephone 44 could have been integral with the second computer 12 so that the authentication code can be automatically known and transferred. Alternatively again, the second computer 12 could be a personal digital assistant, which is basically a telephone/computer with direct connection to the cellular telephone system 42.

In a fourth test 96 the recipient at the second computer 12 awaits confirmation from the secure storage site 30 that the authentication code 34 has been recognised and accepted.

If the authentication code is not successfully accepted, a fifth test 97 permits the user to send the authentication code 34 up to three (or more) times by returning control to the seventeenth operation 95. After three failed attempts the recipient's email message will be denied access indefinitely and control moves to exit 99.

If the recipient at computer 12 receives notification that his authentication code 34 has been recognized, an eighteenth operation 98 retrieves the second email message 24 from the secure storage site 30 and displays it along with any email attachments, within the recipient's Internet browser. At this point control is passed to exit 99.

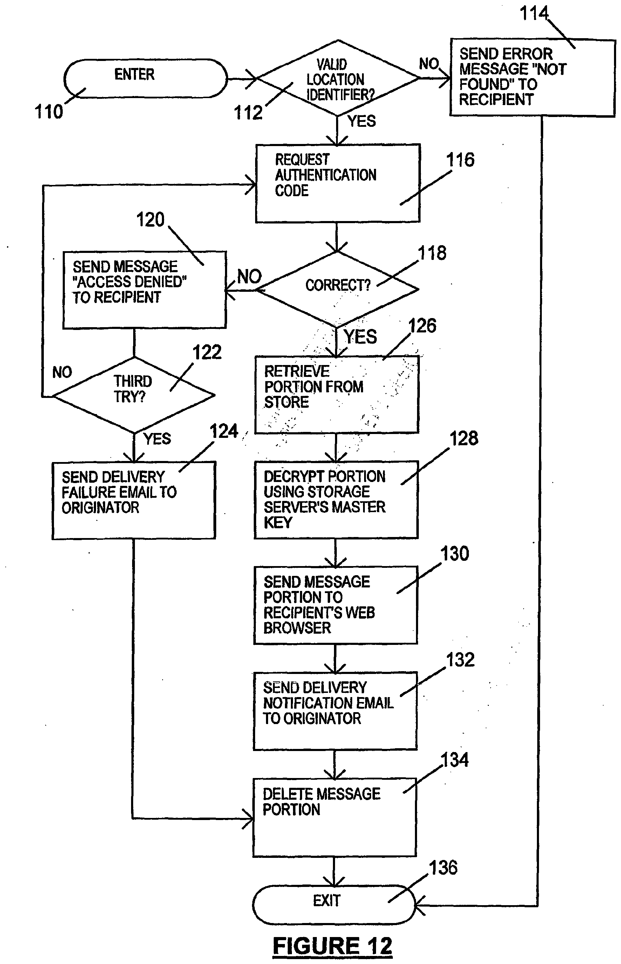

Attention is next drawn to Figure 12, a flow chart showing the activity of the secure storage site 30 when sending the stored message to the second computer 12. For preference, the recipient 12 communicates with the secure storage site 30 using a secure Internet connection from the web browser via an encrypted link to the secure storage site 30, which is associated with a web server. Another alternative is for the recipient 12 to communicate with the secure storage site using a secure Internet connection from a web browser connecting via the URL HTTPS (a secure version of the HTTP protocol) to a web server associated with the secure storage site 30. Another alternative is for the recipient 12 to communicate with the secure storage site 30 using a secure Internet connection from a web browser connecting via a Secure Socket layer (SSL) to the web server associated with the secure store 30. Another alternative is for the recipient 12 to communicate with the secure store 30 using a secure Internet connection from a web browser connecting via Transport Layer Security (TLS) to the web server associated with the secure store 30. Another alternative is for the recipient 12 to communicate with the secure storage site 30 using a secure Internet connection from a mobile device Wireless Access Protocol (WAP) browser connecting to a WAP gateway.

When the recipient at computer 12 first contacts the secure store 30, via their web browser, a web site address (URL) is passed to a web server, which action initiates entry 110. Control is then handed to a sixth test 112 which validates the location identifier supplied within the URL and, if no message can be located within the supplied location, control is passed to a nineteenth operation 114 which sends an error message to the recipient and then passes to exit 136.

If a valid message can be located, the sixth test 112 passes control to a twentieth operation 116 which requests the recipients at the second computer 12 to send the authentication code 34.

A seventh test 118 checks the validity of the received authentication code 34 against the value stored within the secure store 30. If the authentication code 34 fails, control is passed to a twenty first operation 120 which sends an "access denied" message to the recipient and control is then passed to an eighth test 122 which validates how many attempts since the initial storage of the message portion have been made. If this is greater than three (or a configurable value) control is passed to a twenty-second operation 124 which constructs a failure email message notification and sends it to the sender at computer 10. Control then passes to a twenty-third operation 134 which deletes the stored message portion and other details and then proceeds to exit 136.

If however, there have been less than three tries, the eighth test 122 passes control back to the twentieth operation 116 to enable a new authentication attempt.

If the seventh test 118 detects correct authentication of the supplied authentication code 34 from the recipient, control passes to a twenty-fourth operation 126 where the stored message portion 24, along with any attachments, is retrieved from the secure store 30.

A twenty-fifth operation 128 next decrypts the retrieved information using a master key known only to the secure storage site 30 and moves to a twenty-sixth operation 130 in which a web page is constructed containing the secure message portion 18 along with any attachments and then is transmitted via an encrypted link to the recipient's web browser located at the second computer 12.

An optional twenty-seventh operation 132 then constructs a notification email to the sender at the first computer 10 confirming that a successful transmission of email message 14 has been made along with date and time sent.

Control then passes to the twenty third operation 134 which, as earlier described, deletes the stored message and any associated information and moves to 136 exit 136.

MICROSOFT, POWER PC, WINDOWS, WINDOWS XP, MICROSOFT WINDOWS, MICROSOFT MESSENGER and MICROSOFT PASSPORT are all trademarks of Microsoft Corporation and are here acknowledged as such.

The invention is further clarified and explained by the following claims

## Claims

1. A system for secure electronic communication of a secure email message from an originator's computer to a recipient's computer, said system comprising: the originator's computer, an externally accessible store and the recipient's computer; wherein the originator's computer comprises a message splitter, a message sending and code requesting means and an email sending means, the externally accessible store comprises a code sending means and an authentication means, and the recipient's computer comprises an accessing means; and wherein
the message splitter is for splitting the secure email message into a first email message and a second message, including removing a security sensitive portion of the secure email message to be contained by the second message;
the message sending and code requesting means is for using a first network connection to send the second message from the originator's computer to the externally accessible store and requesting a reference code from the externally accessible store, said externally accessible store being operative to grant access to stored content of said second message upon presentation of a two factor authentication comprising an authentication code and the reference code;
the email sending means is for sending the first email message along with the reference code and notification that content of said second message is in said store, from the originator's computer to the recipient's computer;
the code sending means is for using a second network connection, to send said authentication code from the externally accessible store, separately from the reference code, for access by the recipient, in response to receipt of the second message at the externally accessible store;
the accessing means is for the recipient's computer to access said externally accessible store using a third network connection; and
the authentication means is for the recipient's computer to provide said externally accessible store, when so accessed, with said two factor authentication for said externally accessible store to grant access to said content of the second message.

2. A system, according to claim 1, including notification means for said store to send a notification message to said originator's computer when the context of said second message has been accessed.

3. A system, according to any one of claims 1 to 2, wherein said externally accessible store is operative to generate at least a portion of said authentication code.

4. A system, according to any one of claims 1 to 3, wherein said first network connection is a secure connection employing encryption.

5. A system according to claim 4, wherein said secure network connection includes the use of a Secure Socket Layer (SSL).

6. A system, according to any one of claims 1 to 5, wherein said first network connection comprises an internet connection.

7. A system, according to claim 6, wherein said internet connection includes encryption.

8. A system, according to any one of claims 1 to 7, wherein said gateway connects to a cellular telephone network.

9. A system, according to claim 8, including means to send said authentication code for access by the recipient as a visually readable message.

10. A system, according to claim 9, wherein said visually readable message comprises a short message service text message.

11. A system, according to claim 9, wherein said visually readable message comprises Unstructured Supplementary Service Data (USSD).

12. A system, according to any one of the preceding claims, wherein said second network connection connects to a Microsoft Passport network and said code sending means is operative to send said authentication code via said recipient's passport.

13. A system, according to any one of the preceding claims, wherein said second network connection connects to a Microsoft Messenger network and said code sending means is operative to send said authentication code as an instant message.

14. A system, according to any one of the preceding claims, wherein said second network connection connects to a pager network and said code sending means is operative to send said authentication code as a pager message.

15. A system, according to any one of the preceding claims, wherein said second network connection connects to a voice network and said code sending means includes means to generate said authentication code as a synthesised voice message.

16. A system, according to any one of the preceding claims, wherein said authentication code is uniquely generated for the stored content of each second message.

17. A system, according to any one of the preceding claims, including means to provide the identity of the originator of the secure email message along with said authentication code.

18. A system, according to any one of claims 1 to 17, wherein said third network connection comprises a secure Internet connection from a web browser connecting via an encrypted link to a web server.

19. A system, according to any one of claims 1 to 18, wherein said third network connection comprises a secure Internet connection from a web browser connecting via the URL HTTPS.

20. A system, according to any one of claims 1 to 19, wherein said third network connection comprises a secure Internet connection from a web browser connection via a Secure Socket Layer (SSL) to a web server.

21. A system, according to any one of claims 1 to 20, wherein said third network connection comprises a secure Internet connection from a web browser connection via Transport Layer Security (TLS) to a web server.

22. A system, according to any one of claims 1 and 3 to 21, wherein said third network connection comprises a secure Internet connection from a mobile device's Wireless Access Protocol (WAP) browser connecting to a WAP gateway.

23. A method for secure electronic communication of a secure email message from an originator's computer to a recipient's computer, using a system according to any one of the preceding claims, said method comprising the steps of:
splitting, at the originator's computer, the secure email message into a first email message and a second message, including removing a security sensitive portion of the secure email message to be contained by the second message;
employing the message sending code and requesting means to send the second message from the originator's computer to the externally accessible store via the first network connection, and to request a reference code from the externally accessible store, said externally accessible store being operative to grant access to stored content of said second message upon presentation of a two factor authentication comprising an authentication code and the reference code;
sending the first email message, along with the reference code and notification that content of said second message is in said store, from the originator's computer to the recipient's computer;
the externally accessible store connecting by use of the second network connection to send said authentication code, separately from the reference code, for access by the recipient, in response to receipt of the second message at the externally accessible store;
accessing said externally accessible store from the recipient's computer by use of the third network connection and employing the authentication means to provide said externally accessible store, when so assessed, with the necessary two factor authentication comprising said reference code and said authentication code; and
granting access to said content of the second message.

24. A method, according to claim 23 including the step of causing said store to send a notification message to the originator's computer when the content of said second message has been accessed.

25. A method, according to any one of claims 23 to 24, wherein said store is operative to generate at least a portion of said authentication code.

26. A method, according to any one of claims 23 to 25, wherein said first network connection comprises a secure Internet connection.

27. A method, according to claim 26, where use of said secure Internet connection includes use of encryption.

28. A method according to claim 26 or claim 27, wherein said secure Internet connection includes the use of a Secure Socket Layer (SSL).

29. A method, according to any one of claims 23 to 28, wherein said first network connection comprises a secure network connection.

30. A method, according to claim 29, wherein said secure network connection includes encryption.

31. A method, according to any one of claims 23 to 30, wherein said second network connection connects to a cellular telephone network.

32. A method, according to claim 31, including the step of sending said authentication code for access by the recipient as a visually readable message.

33. A method, according to claim 32, wherein said visually readable message comprises a short message service text message.

34. A method, according to claim 32, wherein said visually readable message comprises Unstructured Supplementary Service Data (USSD).

35. A method, according to any one of claims 23 to 30, wherein said second network connection connects to Microsoft Passport network and said method includes the step of sending said authentication code via said recipient's passport.

36. A method, according to any one of claims 23 to 30, wherein said second network connection connects to a Microsoft Messenger network and said method includes the step of sending said authentication code as an instant message.

37. A method, according to any one of claims 23 to 30, wherein said second network connection connects to a pager network and said method includes the step of sending said authentication code as a pager message.

38. A method, according to any one of claims 23 to 30, wherein said second network connection connects to a voice network and said method includes the step of generating said authentication code as a synthesised voice message.

39. A method, according to any one of claims 23 to 38, wherein said authentication code is uniquely generated for the stored content of each second message.

40. A method, according to any one of claims 23 to 39, including the step of providing the identity of the originator of the secure email message along with said authentication code.

41. A method, according to any one of claims 23 to 40, wherein said third network connection comprises a secure Internet connection from a web browser connecting via an encrypted link to a web server.

42. A method, according to any one of claims 23 to 41, wherein said third network connection comprises a secure Internet connection from a web browser connecting via the URL HTTPS.

43. A method, according to any one of claims 23 to 42, wherein said third network connection comprises a secure Internet connection from a web browser connection via a Secure Socket Layer (SSL) to a web server.

44. A method, according to any one of claims 23 to 43, wherein said third network connection comprises a secure Internet connection from a web browser connecting via Transport Layer Security (TLS) to a web server.

45. A method, according to any one of claims 23 to 44, wherein said third network connection comprises a secure Internet connection from a mobile device's Wireless Access Protocol (WAP) browser connecting to a WAP gateway.

## Patentansprüche

1. System zur sicheren elektronischen Kommunikation einer sicheren E-Mail-Nachricht von einem Computer eines Verfassers zu einem Computer eines Empfängers, wobei das System Folgendes umfasst:
den Computer des Verfassers, einen von außen zugänglichen Speicher und den Computer des Empfängers; wobei der Computer des Verfassers einen Nachrichtenteiler, ein Nachrichtensende- und Codeanforderungsmittel und ein E-Mail-Sendemittel umfasst, wobei der von außen zugängliche Speicher ein Codesendemittel und ein Authentifizierungsmittel umfasst und der Computer des Empfängers ein Zugangsmittel umfasst; und wobei
der Nachrichtenteiler dafür ist, die sichere E-Mail-Nachricht in eine erste E-Mail-Nachricht und eine zweite Nachricht zu teilen, einschließlich Entfernen eines sicherheitssensitiven Teils der sicheren E-Mail-Nachricht, der in der zweiten Nachricht enthalten sein soll;
das Nachrichtensende- und Codeanforderungsmittel dafür ist, eine erste Netzwerkverbindung zu verwenden, um die zweite Nachricht vom Computer des Verfassers zum von außen zugänglichen Speicher zu senden, und einen Referenzcode vom von außen zugänglichen Speicher anzufordern, wobei der von außen zugängliche Speicher funktionsfähig ist, einen Zugang zu gespeichertem Inhalt der zweiten Nachricht bei Vorlage einer Zweifaktorenauthentifizierung, die einen Authentifizierungscode und den Referenzcode umfasst, zu gewähren;
das E-Mail-Sendemittel dafür ist, die erste E-Mail-Nachricht zusammen mit dem Referenzcode und einer Benachrichtigung, dass sich ein Inhalt der zweiten Nachricht im Speicher befindet, vom Computer des Verfassers zum Computer des Empfängers zu senden;
das Codesendemittel dafür ist, eine zweite Netzwerkverbindung zu verwenden, um den Authentifizierungscode vom von außen zugänglichen Speicher separat vom Referenzcode für einen Zugang durch den Empfänger als Reaktion auf einen Empfang der zweiten Nachricht am von außen zugänglichen Speicher zu senden;
das Zugangsmittel dafür ist, dass der Computer des Empfängers auf den von außen zugänglichen Speicher unter Verwendung einer dritten Netzwerkverbindung zugreift; und
das Authentifizierungsmittel dafür ist, dass der Computer des Empfängers den von außen zugänglichen Speicher, wenn auf diesen zugegriffen wird, mit der Zweifaktorenauthentifizierung für den von außen zugänglichen Speicher versorgt, um einen Zugang zum Inhalt der zweiten Nachricht zu gewähren.

2. System nach Anspruch 1, das Benachrichtigungsmittel beinhaltet, damit der Speicher eine Benachrichtigungsnachricht zum Computer des Verfassers sendet, wenn auf den Kontext der zweiten Nachricht zugegriffen worden ist.

3. System nach einem der Ansprüche 1 bis 2, wobei der von außen zugängliche Speicher funktionsfähig ist, zumindest einen Teil des Authentifizierungscodes zu erzeugen.

4. System nach einem der Ansprüche 1 bis 3, wobei die erste Netzwerkverbindung eine sichere Verbindung ist, die eine Verschlüsselung einsetzt.

5. System nach Anspruch 4, wobei die sichere Netzwerkverbindung die Verwendung einer Secure Socket Layer (SSL) beinhaltet.

6. System nach einem der Ansprüche 1 bis 5, wobei die erste Netzwerkverbindung eine Internetverbindung umfasst.

7. System nach Anspruch 6, wobei die Internetverbindung eine Verschlüsselung beinhaltet.

8. System nach einem der Ansprüche 1 bis 7, wobei sich das Gateway mit einem Mobiltelefonnetz verbindet.

9. System nach Anspruch 8, das Mittel zum Senden des Authentifizierungscodes für einen Zugang durch den Empfänger als eine visuell lesbare Nachricht sendet.

10. System nach Anspruch 9, wobei die visuell lesbare Nachricht eine Kurznachrichtendienst-Textnachricht umfasst.

11. System nach Anspruch 9, wobei die visuell lesbare Nachricht Unstructured Supplementary Service Data (USSD) umfasst.

12. System nach einem der vorangegangenen Ansprüche, wobei sich die zweite Netzwerkverbindung mit einem Microsoft-Passport-Netzwerk verbindet und das Codesendemittel funktionsfähig ist, den Authentifizierungscode über den Passport des Empfängers zu senden.

13. System nach einem der vorangegangenen Ansprüche, wobei sich die zweite Netzwerkverbindung mit einem Microsoft-Messenger-Netzwerk verbindet und das Codesendemittel funktionsfähig ist, den Authentifizierungscode als eine Sofortnachricht zu senden.

14. System nach einem der vorangegangenen Ansprüche, wobei sich die zweite Netzwerkverbindung mit einem Pager-Netzwerk verbindet und das Codesendemittel funktionsfähig ist, den Authentifizierungscode als eine Pager-Nachricht zu senden.

15. System nach einem der vorangegangenen Ansprüche, wobei sich die zweite Netzwerkverbindung mit einem Sprachnetzwerk verbindet und das Codesendemittel Mittel zum Erzeugen des Authentifizierungscodes als eine synthetisierte Sprachnachricht beinhaltet.

16. System nach einem der vorangegangenen Ansprüche, wobei der Authentifizierungscode spezifisch für den gespeicherten Inhalt jeder zweiten Nachricht erzeugt wird.

17. System nach einem der vorangegangenen Ansprüche, das Mittel zum Bereitstellen der Identität des Verfassers der sicheren E-Mail-Nachricht zusammen mit dem Authentifizierungscode beinhaltet.

18. System nach einem der Ansprüche 1 bis 17, wobei die dritte Netzwerkverbindung eine sichere Internetverbindung von einem Webbrowser, der sich über eine verschlüsselte Verknüpfung zu einem Webserver verbindet, umfasst.

19. System nach einem der Ansprüche 1 bis 18, wobei die dritte Netzwerkverbindung eine sichere Internetverbindung von einem Webbrowser, der sich über das URL-HTTPS verbindet, umfasst.

20. System nach einem der Ansprüche 1 bis 19, wobei die dritte Netzwerkverbindung eine sichere Internetverbindung von einer Webbrowserverbindung über eine Secure Socket Layer (SSL) zu einem Webserver umfasst.

21. System nach einem der Ansprüche 1 bis 20, wobei die dritte Netzwerkverbindung eine sichere Internetverbindung von einer Webbrowserverbindung über Transport Layer Security (TLS) zu einem Webserver umfasst.

22. System nach einem der Ansprüche 1 und 3 bis 21, wobei die dritte Netzwerkverbindung eine sichere Internetverbindung von einem Wireless-Access-Protocol(WAP)-Browser einer mobilen Einrichtung, der sich mit einem WAP-Gateway verbindet, umfasst.

23. Verfahren zur sicheren elektronischen Kommunikation einer sicheren E-Mail-Nachricht von einem Computer eines Verfassers zu einem Computer eines Empfängers unter Verwendung eines Systems nach einem der vorangegangenen Ansprüche, wobei das Verfahren die folgenden Schritte umfasst:
Teilen, am Computer des Verfassers, der sicheren E-Mail-Nachricht in eine erste E-Mail-Nachricht und eine zweite Nachricht, einschließlich Entfernen eines sicherheitssensitiven Teils der sicheren E-Mail-Nachricht, der in der zweiten Nachricht enthalten sein soll;
Einsetzen des Nachrichtensendecode- und Anforderungsmittels, um die zweite Nachricht vom Computer des Verfassers über die erste Netzwerkverbindung zum von außen zugänglichen Speicher zu senden und einen Referenzcode vom von außen zugänglichen Speicher anzufordern, wobei der von außen zugängliche Speicher funktionsfähig ist, einen Zugang zu gespeichertem Inhalt der zweiten Nachricht bei Vorlage einer Zweifaktorenauthentifizierung, die einen Authentifizierungscode und den Referenzcode umfasst, zu gewähren;
Senden der ersten E-Mail-Nachricht zusammen mit dem Referenzcode und einer Benachrichtigung, dass sich ein Inhalt der zweiten Nachricht im Speicher befindet, vom Computer des Verfassers zum Computer des Empfängers;
wobei sich der von außen zugängliche Speicher durch Verwendung der zweiten Netzwerkverbindung verbindet, um den Authentifizierungscode separat vom Referenzcode für einen Zugang durch den Empfänger als Reaktion auf einen Empfang der zweiten Nachricht am von außen zugänglichen Speicher zu senden;
Zugreifen auf den von außen zugänglichen Speicher vom Computer des Empfängers durch Verwendung der dritten Netzwerkverbindung und Einsetzen des Authentifizierungsmittels, um den von außen zugänglichen Speicher, wenn so bestimmt, mit der notwendigen Zweifaktorenauthentifizierung, die den Referenzcode und den Authentifizierungscode umfasst, zu versorgen; und
Gewähren eines Zugangs zum Inhalt der zweiten Nachricht.

24. Verfahren nach Anspruch 23, das den Schritt des Bewirkens, dass der Speicher eine Benachrichtigungsnachricht zum Computer des Verfassers sendet, beinhaltet, wenn auf den Inhalt der zweiten Nachricht zugegriffen worden ist.

25. Verfahren nach einem der Ansprüche 23 bis 24, wobei der Speicher funktionsfähig ist, zumindest einen Teil des Authentifizierungscodes zu erzeugen.

26. Verfahren nach einem der Ansprüche 23 bis 25, wobei die erste Netzwerkverbindung eine sichere Internetverbindung umfasst.

27. Verfahren nach Anspruch 26, wobei die Verwendung der sicheren Internetverbindung eine Verwendung einer Verschlüsselung beinhaltet.

28. Verfahren nach Anspruch 26 oder Anspruch 27, wobei die sichere Internetverbindung die Verwendung einer Secure Socket Layer (SSL) beinhaltet.

29. Verfahren nach einem der Ansprüche 23 bis 28, wobei die erste Netzwerkverbindung eine sichere Netzwerkverbindung umfasst.

30. Verfahren nach Anspruch 29, wobei die sichere Netzwerkverbindung eine Verschlüsselung beinhaltet.

31. Verfahren nach einem der Ansprüche 23 bis 30, wobei sich die zweite Netzwerkverbindung mit einem Mobiltelefonnetz verbindet.

32. Verfahren nach Anspruch 31, das den Schritt des Sendens des Authentifizierungscodes für einen Zugang durch den Empfänger als eine visuell lesbare Nachricht beinhaltet.

33. Verfahren nach Anspruch 32, wobei die visuell lesbare Nachricht eine Kurznachrichtendienst-Textnachricht umfasst.

34. Verfahren nach Anspruch 32, wobei die visuell lesbare Nachricht Unstructured Supplementary Service Data (USSD) umfasst.

35. Verfahren nach einem der Ansprüche 23 bis 30, wobei sich die zweite Netzwerkverbindung mit einem Microsoft-Passport-Netzwerk verbindet und das Verfahren den Schritt des Sendens des Authentifizierungscodes über den Passport des Empfängers beinhaltet.

36. Verfahren nach einem der Ansprüche 23 bis 30, wobei sich die zweite Netzwerkverbindung mit einem Microsoft-Messenger-Netzwerk verbindet und das Verfahren den Schritt des Sendens des Authentifizierungscodes als eine Sofortnachricht beinhaltet.

37. Verfahren nach einem der Ansprüche 23 bis 30, wobei sich die zweite Netzwerkverbindung mit einem Pager-Netzwerk verbindet und das Verfahren den Schritt des Sendens des Authentifizierungscodes als eine Pager-Nachricht beinhaltet.

38. Verfahren nach einem der Ansprüche 23 bis 30, wobei sich die zweite Netzwerkverbindung mit einem Sprachnetzwerk verbindet und das Verfahren den Schritt des Erzeugens des Authentifizierungscodes als eine synthetisierte Sprachnachricht beinhaltet.

39. Verfahren nach einem der Ansprüche 23 bis 38, wobei der Authentifizierungscode spezifisch für den gespeicherten Inhalt jeder zweiten Nachricht erzeugt wird.

40. Verfahren nach einem der Ansprüche 23 bis 39, das den Schritt des Bereitstellens der Identität des Verfassers der sicheren E-Mail-Nachricht zusammen mit dem Authentifizierungscode beinhaltet.

41. Verfahren nach einem der Ansprüche 23 bis 40, wobei die dritte Netzwerkverbindung eine sichere Internetverbindung von einem Webbrowser, der sich über eine verschlüsselte Verknüpfung zu einem Webserver verbindet, umfasst.

42. Verfahren nach einem der Ansprüche 23 bis 41, wobei die dritte Netzwerkverbindung eine sichere Internetverbindung von einem Webbrowser, der sich über das URL-HTTPS verbindet, umfasst.

43. Verfahren nach einem der Ansprüche 23 bis 42, wobei die dritte Netzwerkverbindung eine sichere Internetverbindung von einer Webbrowserverbindung über eine Secure Socket Layer (SSL) zu einem Webserver umfasst.

44. Verfahren nach einem der Ansprüche 23 bis 43, wobei die dritte Netzwerkverbindung eine sichere Internetverbindung von einem Webbrowser, der sich über Transport Layer Security (TLS) zu einem Webserver verbindet, umfasst.

45. Verfahren nach einem der Ansprüche 23 bis 44, wobei die dritte Netzwerkverbindung eine sichere Internetverbindung von einem Wireless-Access-Protocol(WAP)-Browser einer mobilen Einrichtung, der sich zu einem WAP-Gateway verbindet, umfasst.

## Revendications

1. Système de communication électronique sécurisée d'un message électronique sécurisé entre un ordinateur d'un expéditeur et un ordinateur d'un destinataire, ledit système comprenant : l'ordinateur de l'expéditeur, une mémoire accessible en externe et l'ordinateur du destinataire ; dans lequel l'ordinateur de l'expéditeur comprend un répartiteur de message, un moyen d'envoi de message et de demande de code, et un moyen d'envoi de message électronique, la mémoire accessible en externe comprend un moyen d'envoi de code et un moyen d'authentification, et l'ordinateur du destinataire comprend un moyen d'accès ; et dans lequel :
le répartiteur de message est destiné à scinder le message électronique sécurisé en un premier message électronique et un second message, y compris à éliminer une partie sensible en termes de sécurité du message électronique sécurisé qui doit être contenu dans le second message ;
le moyen d'envoi de message et de demande de code est destiné à utiliser une première connexion réseau pour envoyer le second message entre l'ordinateur de l'expéditeur et la mémoire accessible en externe et pour demander un code de référence à la mémoire accessible en externe, ladite mémoire accessible en externe ayant pour fonction d'accorder l'accès au contenu stocké dudit second message lors de la présentation d'une authentification à deux facteurs comprenant un code d'authentification et le code de référence ;
le moyen d'envoi de message électronique est destiné à envoyer le premier message électronique avec le code de référence et une notification selon laquelle le contenu dudit second message se trouve dans ladite mémoire, entre l'ordinateur de l'expéditeur et l'ordinateur du destinataire ;
le moyen d'envoi de code est destiné à utiliser une seconde connexion réseau, pour envoyer ledit code d'authentification depuis la mémoire accessible en externe, séparément du code de référence, en vue de son accès par le destinataire, en réponse à la réception du second message au niveau de la mémoire accessible en externe ;
le moyen d'accès est destiné à permettre à l'ordinateur du destinataire d'accéder à ladite mémoire accessible en externe en utilisant une troisième connexion réseau ; et
le moyen d'authentification est destiné à permettre à l'ordinateur du destinataire de fournir à ladite mémoire accessible en externe, lorsqu'elle est accédée, ladite authentification à deux facteurs pour permettre à ladite mémoire accessible en externe d'accorder l'accès audit contenu du second message.

2. Système selon la revendication 1, comprenant un moyen de notification destiné à permettre à ladite mémoire d'envoyer un message de notification audit ordinateur de l'expéditeur lorsque le contexte dudit second message a été accédé.

3. Système selon l'une quelconque des revendications 1 et 2, dans lequel ladite mémoire accessible en externe a pour fonction de générer au moins une partie dudit code d'authentification.

4. Système selon l'une quelconque des revendications 1 à 3, dans lequel ladite première connexion réseau est une connexion sécurisée qui utilise un cryptage.

5. Système selon la revendication 4, dans lequel ladite connexion réseau sécurisée comprend l'utilisation d'un SSL (Secure Socket Layer).

6. Système selon l'une quelconque des revendications 1 à 5, dans lequel ladite première connexion réseau comprend une connexion Internet.

7. Système selon la revendication 6, dans lequel ladite connexion Internet comprend un cryptage.

8. Système selon l'une quelconque des revendications 1 à 7, dans lequel ladite passerelle se connecte à un réseau téléphonique cellulaire.

9. Système selon la revendication 8, comprenant un moyen destiné à envoyer ledit code d'authentification en vue de son accès par le destinataire sous forme de message visuellement visible.

10. Système selon la revendication 9, dans lequel ledit message visuellement lisible comprend un message sous forme de SMS.

11. Système selon la revendication 9, dans lequel ledit message visuellement lisible comprend un USSD (Unstructured Supplementary Service Data - Service supplémentaire pour données non structurées).

12. Système selon l'une quelconque des revendications précédentes, dans lequel ladite seconde connexion réseau se connecte à un réseau Microsoft Passport et ledit moyen d'envoi de code a pour fonction d'envoyer ledit code d'authentification via le réseau Passport dudit destinataire.

13. Système selon l'une quelconque des revendications précédentes, dans lequel ladite seconde connexion réseau se connecte à un réseau Microsoft Messenger et ledit moyen d'envoi de code est capable d'envoyer ledit code d'authentification sous forme de message instantané.

14. Système selon l'une quelconque des revendications précédentes, dans lequel ladite seconde connexion réseau se connecte à un réseau de pager et ledit moyen d'envoi de code a pour fonction d'envoyer ledit code d'authentification sous forme de message de pager.

15. Système selon l'une quelconque des revendications précédentes, dans lequel ladite seconde connexion réseau se connecte à un réseau vocal et ledit moyen d'envoi de code comprend un moyen de génération dudit code d'authentification sous forme de message vocal synthétisé.

16. Système selon l'une quelconque des revendications précédentes, dans lequel ledit code d'authentification est généré uniquement pour le contenu stocké de chaque second message.

17. Système selon l'une quelconque des revendications précédentes, comprenant un moyen destiné à fournir l'identité de l'expéditeur du message électronique sécurisé avec ledit code d'authentification.

18. Système selon l'une quelconque des revendications 1 à 17, dans lequel ladite troisième connexion réseau comprend une connexion Internet sécurisée depuis un navigateur Web qui se connecte via un lien crypté à un serveur Web.

19. Système selon l'une quelconque des revendications 1 à 18, dans lequel ladite troisième connexion réseau comprend une connexion Internet sécurisée depuis un navigateur Web qui se connecte via l'URL HTTPS.

20. Système selon l'une quelconque des revendications 1 à 19, dans lequel ladite troisième connexion réseau comprend une connexion Internet sécurisée depuis un navigateur Web qui se connecte via un SSL (Secure Socket Layer) à un serveur Web.

21. Système selon l'une quelconque des revendications 1 à 20, dans lequel ladite troisième connexion réseau comprend une connexion Internet sécurisée depuis un navigateur Web qui se connecte via un TLS (Transport Layer Security) à un serveur Web.

22. Système selon l'une quelconque des revendications 1 et 3 à 21, dans lequel ladite troisième connexion réseau comprend une connexion Internet sécurisée depuis un navigateur WAP (protocole d'accès sans fil) d'un dispositif mobile qui se connecte à une passerelle WAP.

23. Procédé de communication électronique sécurisée d'un message électronique sécurisé entre un ordinateur d'un expéditeur et un ordinateur d'un destinataire, en utilisant un système selon l'une quelconque des revendications précédentes, ledit procédé comprenant les étapes suivantes :
le scindage, au niveau de l'ordinateur de l'expéditeur, du message électronique sécurisé en un premier message électronique et un second message, y compris l'élimination d'une partie sensible en termes de sécurité du message électronique sécurisé qui doit être contenu dans le second message ;
l'utilisation du moyen d'envoi de message et de demande de code pour envoyer le second message entre l'ordinateur de l'expéditeur et la mémoire accessible en externe via la première connexion réseau, et pour demander un code de référence à la mémoire accessible en externe, ladite mémoire accessible en externe ayant pour fonction d'accorder l'accès au contenu stocké dudit second message lors de la présentation d'une authentification à deux facteurs comprenant un code d'authentification et le code de référence ;
l'envoi du premier message électronique, avec le code de référence et une notification selon laquelle le contenu dudit second message se trouve dans ladite mémoire, entre l'ordinateur de l'expéditeur et l'ordinateur du destinataire ;
la mémoire accessible en externe se connectant à l'aide de la seconde connexion réseau pour envoyer ledit code d'authentification, séparément du code de référence, en vue de son accès par le destinataire, en réponse à la réception du second message au niveau de la mémoire accessible en externe ;
l'accès à ladite mémoire accessible en externe depuis l'ordinateur du destinataire en utilisant la troisième connexion réseau et l'utilisation du moyen d'authentification pour fournir à ladite mémoire accessible en externe, lorsqu'elle est accédée, l'authentification à deux facteurs nécessaire comprenant ledit code de référence et ledit code d'authentification ; et
l'octroi d'un accès audit contenu du second message.

24. Procédé selon la revendication 23, comprenant l'étape consistant à amener ladite mémoire à envoyer un message de notification à l'ordinateur de l'expéditeur lorsque le contenu dudit second message a été accédé.

25. Procédé selon l'une quelconque des revendications 23 et 24, dans lequel ladite mémoire a pour fonction de générer au moins une partie dudit code d'authentification.

26. Procédé selon l'une quelconque des revendications 23 à 25, dans lequel ladite première connexion réseau comprend une connexion Internet sécurisée.

27. Procédé selon la revendication 26, dans lequel l'utilisation de ladite connexion Internet sécurisée comprend l'utilisation d'un cryptage.

28. Procédé selon la revendication 26 ou la revendication 27, dans lequel ladite connexion Internet sécurisée comprend l'utilisation d'un SSL (Secure Socket Layer).

29. Procédé selon l'une quelconque des revendications 23 à 28, dans lequel ladite première connexion réseau comprend une connexion réseau sécurisée.

30. Procédé selon la revendication 29, dans lequel ladite connexion réseau sécurisée comprend un cryptage.

31. Procédé selon l'une quelconque des revendications 23 à 30, dans lequel ladite seconde connexion réseau se connecte à un réseau téléphonique cellulaire.

32. Procédé selon la revendication 31, comprenant l'étape d'envoi dudit code d'authentification en vue de son accès par le destinataire sous forme de message visuellement lisible.

33. Procédé selon la revendication 32, dans lequel ledit message visuellement lisible comprend un message sous forme de SMS.

34. Procédé selon la revendication 32, dans lequel ledit message visuellement lisible comprend un USSD (Unstructured Supplementary Service Data - Service supplémentaire pour données non structurées).

35. Procédé selon l'une quelconque des revendications 23 à 30, dans lequel ladite seconde connexion réseau se connecte à un réseau Microsoft Passport et ledit procédé comprenant l'étape d'envoi dudit code d'authentification via le réseau Passport dudit destinataire.

36. Procédé selon l'une quelconque des revendications 23 à 30, dans lequel ladite seconde connexion réseau se connecte à un réseau Microsoft Messenger et ledit procédé comprenant l'étape d'envoi dudit code d'authentification sous forme de message instantané.

37. Procédé selon l'une quelconque des revendications 23 à 30, dans lequel ladite seconde connexion réseau se connecte à un réseau de pager et ledit procédé comprenant l'étape d'envoi dudit code d'authentification sous forme de message de pager.

38. Procédé selon l'une quelconque des revendications 23 à 30, dans lequel ladite seconde connexion réseau se connecte à un réseau vocal et ledit procédé comprenant l'étape de génération dudit code d'authentification sous forme de message vocal synthétisé.

39. Procédé selon l'une quelconque des revendications 23 à 38, dans lequel ledit code d'authentification est généré uniquement pour le contenu stocké de chaque second message.

40. Procédé selon l'une quelconque des revendications 23 à 39, comprenant l'étape de fourniture de l'identité de l'expéditeur du message électronique sécurisé avec ledit code d'authentification.

41. Procédé selon l'une quelconque des revendications 23 à 40, dans lequel ladite troisième connexion réseau comprend une connexion Internet sécurisée depuis un navigateur Web qui se connecte via un lien crypté à un serveur Web.

42. Procédé selon l'une quelconque des revendications 23 à 41, dans lequel ladite troisième connexion réseau comprend une connexion Internet sécurisée depuis un navigateur Web qui se connecte via l'URL HTTPS.

43. Procédé selon l'une quelconque des revendications 23 à 42, dans lequel ladite troisième connexion réseau comprend une connexion Internet sécurisée depuis un navigateur Web qui se connecte via un SSL (Secure Socket Layer) à un serveur Web.

44. Procédé selon l'une quelconque des revendications 23 à 43, dans lequel ladite troisième connexion réseau comprend une connexion Internet sécurisée depuis un navigateur Web qui se connecte via un TLS (Transport Layer Security) à un serveur Web.

45. Procédé selon l'une quelconque des revendications 23 à 44, dans lequel ladite troisième connexion réseau comprend une connexion Internet sécurisée depuis un navigateur Web WAP (protocole d'accès sans fil) d'un dispositif mobile qui se connecte à une passerelle WAP.
